(19) Europäisches Patentamt
European Patent Office
Office européen des brevets

(11) **EP 3 932 199 A1**

(12) **EUROPEAN PATENT APPLICATION**
published in accordance with Art. 153(4) EPC

(43) Date of publication:
**05.01.2022 Bulletin 2022/01**

(51) Int Cl.:
**A01M 7/00** *(2006.01)*

(21) Application number: **20766068.9**

(86) International application number:
**PCT/CN2020/074711**

(22) Date of filing: **11.02.2020**

(87) International publication number:
**WO 2020/177506 (10.09.2020 Gazette 2020/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.03.2019 CN 201910167888**

(71) Applicant: **Guangzhou Xaircraft Technology Co.,
Ltd**
**Tianhe District**
**Guangzhou,**
**Guangdong 510000 (CN)**

(72) Inventor: **LIU, Bo**
**Guangzhou, Guangdong 510000 (CN)**

(74) Representative: **Murgitroyd & Company**
**Murgitroyd House**
**165-169 Scotland Street**
**Glasgow G5 8PL (GB)**

(54) **PESTICIDE SPRAYING CONTROL METHOD, APPARATUS, AND DEVICE, AND STORAGE MEDIUM**

(57) A pesticide spraying control method and apparatus, a device, and a storage medium. The method includes: planning, by a controller, a spraying route matching an area to be sprayed, and mapping the spraying route to a crop prescription map matching the area to be sprayed; and determining, by the controller, a spraying control point in the spraying route and a spraying amount matching the spraying control point based on crop state information in at least two areas included in the crop prescription map. The spraying control point is associated with an actual spraying point of an operation unmanned aerial vehicle. The actual spraying point is spaced from the spraying control point associated with the actual spraying point by a set distance on the spraying route and is located before the spraying control point associated with the actual spraying point in a forward direction of the operation unmanned aerial vehicle.

| Planning, by a controller, a spraying route matching an area to be sprayed, and mapping the spraying route to a crop prescription map matching the area to be sprayed | ~S110 |

| Determining, by the controller, a spraying control point in the spraying route and a spraying amount matching the spraying control point based on crop state information in at least two areas included in the crop prescription map | ~S120 |

FIG. 1a

EP 3 932 199 A1

## Description

### CROSS-REFERENCE TO RELATED APPLICATIONS

This application claims priority to Chinese Patent Application No. 201910167888.0, filed with the Chinese Patent Office on March 6, 2019, and entitled "PESTICIDE SPRAYING CONTROL METHOD AND APPARATUS, DEVICE, AND STORAGE MEDIUM", which is incorporated herein by reference in its entirety.

### TECHNICAL FIELD

Embodiments of the present disclosure relate to pesticide spraying control technologies, and in particular, to a pesticide spraying control method and apparatus, a device, and a storage medium.

### BACKGROUND

With the development of science and technology, traditional agricultural production modes are gradually replaced by mechanized and informational methods. Adopting a plant protection unmanned aerial vehicle for low-altitude spraying operations has the characteristics of flexible use, small volume and low cost, which can greatly improve the efficiency and precision of agricultural and forestry vegetation operations.

At present, in the process of self-spraying operation in farmland with the plant protection unmanned aerial vehicle, a flight route of the unmanned aerial vehicle is planned according to a spraying area in advance, and spraying flow of the unmanned aerial vehicle is controlled according to a preset amount of pesticide per unit area. For the existing uniform spraying method of spraying pesticides into a farmland, there are problems such as excessive application of pesticides and waste of farmers' plant protection costs in some local areas where pest and weed are non-serious or have not occurred. In this case, different spraying points can be set for an unmanned aerial vehicle, and different spraying amounts are allocated for the different spraying points to implement adaptive spraying to the farmland.

During implementation of the present disclosure, the inventor found that when adaptive spraying is performed, an operation unmanned aerial vehicle is controlled to spray a pesticide according to a corresponding spraying amount after flying to a spraying point. In the foregoing spraying process, the actual flying condition of the unmanned aerial vehicle and a delay of the pesticide arriving on the farmland are not considered, which may cause that the pesticide with a set spraying amount does not actually cover the theoretically set farmland, thereby weakening the spraying effect of the pesticide.

### SUMMARY

Embodiments of the present disclosure provide a pesticide spraying control method and apparatus, a device, and a storage medium, so as to optimize an existing pesticide spraying technology and ensure a pesticide spraying effect during adaptive pesticide spraying to the greatest extent.

According to a first aspect, an embodiment of the present disclosure provides a pesticide spraying control method, including:

planning, by a controller, a spraying route matching an area to be sprayed, and mapping the spraying route to a crop prescription map matching the area to be sprayed;

determining, by the controller, a spraying control point in the spraying route and a spraying amount matching the spraying control point based on crop state information in at least two areas included in the crop prescription map, where the spraying control point is associated with an actual spraying point of an operation unmanned aerial vehicle; and the actual spraying point is spaced from the spraying control point associated with the actual spraying point by a set distance on the spraying route and is located before the spraying control point associated with the actual spraying point in a forward direction of the operation unmanned aerial vehicle.

Further, the crop prescription map specifically includes at least two grid areas, and a pest and weed severity level or a plant density level is separately associated in each grid area as crop state information.

Further, before the planning, by a controller, a spraying route matching an area to be sprayed, the method further includes: obtaining, by the controller, pest and weed data matching the area to be sprayed, where the pest and weed data includes image data and/or spectral data; dividing, by the controller, the pest and weed data according to grid areas in a standard spatial coordinate system; identifying, by the controller, the pest and weed severity level based on pest and weed data in each grid area after division; and generating, by the controller, the crop prescription map based on a recognition result for each grid area.

Further, the determining, by the controller, a spraying control point in the spraying route and a spraying amount matching the spraying control point based on crop state information in at least two areas included in the crop prescription map includes: determining, by the controller, equidistant spraying control points among a plurality of spraying passing points corresponding to the spraying route; dividing, by the controller, each standard line segment into at least one grid inner line segment based on a positional relationship between a grid area boundary in the crop prescription map and a standard line segment formed by connecting every two adjacent spraying control points; and determining, by the controller, a spraying amount matching each of the spraying control points based on at least one grid inner line segment associated with each of the spraying control points and a pest and weed severity level in a grid area matching the at least one grid inner line segment.

Further, the determining, by the controller, equidistant spraying control points among a plurality of spraying passing points corresponding to the spraying route includes: obtaining, by the controller, a received signal response time and a flight speed, and determining a control point spacing based on a route distance between a spraying start point and a spraying end point; extracting, by the controller, the spraying start point and the spraying end point from the plurality of spraying passing points corresponding to the spraying route, and using both as the spraying control points; and separately determining, by the controller, each spraying control point on a spraying route between the spraying start point and the spraying end point based on the control point spacing, where a route distance between every two adjacent spraying control points is equal to the control point spacing.

Further, the dividing, by the controller, each standard line segment into at least one grid inner line segment based on a positional relationship between a grid area boundary in the crop prescription map and a standard line segment formed by connecting every two adjacent spraying control points includes: when determining that the grid area boundary in the crop prescription map intersects with the standard line segment formed by connecting two adjacent spraying control points, obtaining, by the controller, at least one intersection point of the standard line segment and the grid area boundary, respectively extracting two adjacent points from the two adjacent spraying control points and the at least one intersection point, and connecting the two adjacent points to form at least two grid inner line segments; or when determining that there is no intersection point between the grid area boundary in the crop prescription map and the standard line segment formed by connecting two adjacent spraying control points, using, by the controller, the standard line segment as a grid inner line segment.

Further, the determining, by the controller, a spraying control point in the spraying route and a spraying amount matching the spraying control point based on crop state information in at least two areas included in the crop prescription map includes: using, by the controller, intersection points of the spraying route and a grid area boundary in the crop prescription map as non-equidistant spraying control points; and using, by the controller, a standard line segment formed by connecting every two adjacent spraying control points as a grid inner line segment, and determining a spraying amount matching each of the spraying control points based on at least one grid inner line segment associated with each of the spraying control points and a pest and weed severity level in a grid area matching the at least one grid inner line segment.

Further, before the planning, by a controller, a spraying route matching an area to be sprayed, the method further includes: obtaining an actual geographic area including a crop to be sprayed; and determining at least one area to be sprayed in the actual geographical area based on the crop state information obtained of each area in the crop prescription map corresponding to the actual geographical area, where an area range of the area to be sprayed is less than or equal to an area range of the actual geographical area.

Further, after the determining, by the controller, a spraying control point in the spraying route and a spraying amount matching the spraying control point based on crop state information in at least two areas included in the crop prescription map, the method further includes: sending, by the controller, the spraying route, each of the spraying control points, and the spraying amount matching the spraying control point to the operation unmanned aerial vehicle, so that the operation unmanned aerial vehicle performs pesticide spraying according to the spraying amount matching the spraying control point associated with the actual spraying point when flying along the spraying route to an actual spraying point at a set distance from each of the spraying control points.

Further, after the determining, by the controller, a spraying control point in the spraying route and a spraying amount matching the spraying control point based on crop state information in at least two areas included in the crop prescription map, the method further includes: determining, by the controller in the spraying route, an actual spraying point at a set distance from each of the spraying control points; establishing, by the controller, a correspondence between each actual spraying point and a spraying amount based on the spraying control point; and sending, by the controller, the spraying route, each of the actual spraying points, and the spraying amount corresponding to the actual spraying point to the operation unmanned aerial vehicle, so that the operation unmanned aerial vehicle performs pesticide spraying according to a corresponding spraying amount when flying along the spraying route to each of the actual spraying points.

Further, the determining, by the controller in the spraying route, an actual spraying point at a set distance from each of the spraying control points includes: obtaining, by the controller, at least one speed association parameter of the operation unmanned aerial vehicle on the spraying route; determining, by the controller based on the speed association parameter, a distance value corresponding to each spraying control point; and determining, in the spraying route based on the distance value corresponding to each spraying control point, the actual spraying point at the set distance from each spraying control point.

According to a second aspect, an embodiment of the present disclosure further provides a pesticide spraying control method, including:

receiving, by an operation unmanned aerial vehicle, a spraying route, each spraying control point, and a spraying amount matching the spraying control point that are sent by a controller, where the spraying control point and the spraying amount are determined by the controller based on crop state information in at least two areas included in a crop prescription map after the controller maps a planned spraying route to the crop prescription map matching an area to be sprayed;

performing, by the operation unmanned aerial vehicle, a spraying operation along the spraying route, and obtaining, in real time, the closest spraying control point in a forward direction as a target spraying control point;

detecting, by the operation unmanned aerial vehicle in real time, a distance value between a current position point and the target spraying control point;

performing, by the operation unmanned aerial vehicle, pesticide spraying according to a spraying amount matching the target spraying control point when determining that the distance value meets a preset distance interval condition; and

returning to perform an operation of obtaining, in real time, the closest spraying control point in the forward direction as the target spraying control point, until the spraying operation for the area to be sprayed is completed.

According to a third aspect, an embodiment of the present disclosure further provides a pesticide spraying control method, including:

receiving, by an operation unmanned aerial vehicle, a spraying route, each actual spraying point, and a spraying amount corresponding to the actual spraying point that are sent by a controller, where the actual spraying point and the spraying amount are determined by the controller based on a spraying control point, a spraying amount and a preset distance that are determined based on crop state information in at least two areas included in a crop prescription map after the controller maps a planned spraying route to the crop prescription map matching an area to be sprayed; and

performing, by the operation unmanned aerial vehicle, a spraying operation along the spraying route, and when flying to each actual spraying point, performing pesticide spraying according to a matched spraying amount, until the spraying operation for the area to be sprayed is completed.

According to a fourth aspect, an embodiment of the present disclosure further provides a pesticide spraying control apparatus, including:

a module for determining a spraying route, configured to plan a spraying route matching an area to be sprayed, and map the spraying route to a crop prescription map matching the area to be sprayed; and

a module for determining a spraying control point and a spraying amount, configured to determine a spraying control point in the spraying route and a spraying amount matching the spraying control point based on crop state information in at least two areas included in the crop prescription map, where the spraying control point is associated with an actual spraying point of an operation unmanned aerial vehicle; and the actual spraying point is spaced from the spraying control point associated with the actual spraying point by a set distance on the spraying route and is located before the spraying control point associated with the actual spraying point in a forward direction of the operation unmanned aerial vehicle.

According to a fifth aspect, an embodiment of the present disclosure further provides a pesticide spraying control apparatus, including:

a module for receiving spraying information, configured to receive a spraying route, each spraying control point, and a spraying amount matching the spraying control point that are sent by a controller, where the spraying control point and the spraying amount are determined by the controller based on crop state information in at least two areas included in a crop prescription map after the controller maps a planned spraying route to the crop prescription map matching an area to be sprayed;

a module for determining a target spraying control point, configured to perform a spraying operation along the spraying route, and obtain, in real time, the closest spraying control point in a forward direction as the target spraying control point;

a distance detection module, configured to detect, in real time, a distance value between a current position point and the target spraying control point;

a pesticide spraying module, configured to perform pesticide spraying according to a spraying amount matching the target spraying control point when it is determined that the distance value meets a preset distance interval condition; and

a cyclic real-time detection module, configured to return to perform an operation of obtaining, in real time, the closest spraying control point in the forward direction as the target spraying control point, until the spraying operation for the area to be sprayed is completed.

According to a sixth aspect, an embodiment of the present disclosure further provides a pesticide spraying control apparatus, including:

a module for receiving spraying information, configured to receive a spraying route, each actual spraying point, and a spraying amount corresponding to the actual spraying point that are sent by a controller, where the actual spraying point and the spraying amount are determined by the controller based on a spraying control point, a spraying amount and a preset distance that are determined based on crop state information in at least two areas included in a crop prescription map after the controller maps a planned spraying route to the crop prescription map matching an area to be sprayed; and

a pesticide spraying module, configured to perform a spraying operation along the spraying route, and when flying to each actual spraying point, perform pesticide spraying according to a matched spraying amount, until the spraying operation for the area to be sprayed is completed.

According to a seventh aspect, an embodiment of the present disclosure further provides a device, including a memory, a processor, and a computer program stored in the memory and executable on the processor, where the program, when executed by the processor, the pesticide spraying control method according to any one of the embodiments in the present disclosure is implemented.

According to an eighth aspect, an embodiment of the present disclosure further provides a computer readable storage medium, storing a computer program, where when the program is executed by a processor, the pesticide spraying control method according to any one of the embodiments in the present disclosure is implemented.

In the present disclosure, a spraying route is mapped to a crop prescription map to determine a spraying control point on the spraying route and a spraying amount matching each spraying control point. In addition, based on each spraying control point, an actual spraying point on the spraying route and before the spraying control point is determined, so that an unmanned aerial vehicle can spray a pesticide with a spraying amount when arriving at the actual spraying point, which solves the problem in the prior art that a farmland at the spraying control point is not covered with the pesticide due to start of pesticide spraying at the spraying control point, and implements a comprehensive consideration of a flight situation of the unmanned aerial vehicle and a time delay when the pesticide arrives at the farmland. Thus, the pesticide fully covers on the farmland suffering from pest and weed, optimizing the existing pesticide spraying technology, adaptively adjusting the actual spraying position, and ensuring a pesticide spraying effect during adaptive pesticide spraying to the greatest extent.

## BRIEF DESCRIPTION OF DRAWINGS

FIG. 1a is a flowchart of a pesticide spraying control method according to Embodiment 1 of the present disclosure.
FIG. 1b is a schematic diagram of an area to be sprayed according to Embodiment 1 of the present disclosure.
FIG. 2a is a flowchart of a pesticide spraying control method according to Embodiment 2 of the present disclosure.
FIG. 2b is a schematic diagram of equidistant spraying control points according to Embodiment 2 of the present disclosure.
FIG. 3a is a flowchart of a pesticide spraying control method according to Embodiment 3 of the present disclosure.
FIG. 3b is a schematic diagram of non-equidistant spraying control points according to Embodiment 3 of the present disclosure.
FIG. 4 is a flowchart of a pesticide spraying control method according to Embodiment 4 of the present disclosure.
FIG. 5 is a flowchart of a pesticide spraying control method according to Embodiment 5 of the present disclosure.
FIG. 6 is a structural diagram of a pesticide spraying control apparatus according to Embodiment 6 of the present disclosure.
FIG. 7 is a structural diagram of a pesticide spraying control apparatus according to Embodiment 7 of the present disclosure.
FIG. 8 is a structural diagram of a pesticide spraying control apparatus according to Embodiment 8 of the present disclosure.
FIG. 9 is a schematic structural diagram of a device according to Embodiment 9 of the present disclosure.

## DETAILED DESCRIPTION

The following further describes the present disclosure in detail with reference to the accompanying drawings and embodiments. It may be understood that the specific embodiments described herein are intended only to explain the present disclosure, but not intended for limiting the present disclosure. It should also be noted that, for ease of description, only part of a structure relevant to the present disclosure is shown in the accompanying drawings instead of the whole structure.

Embodiment 1

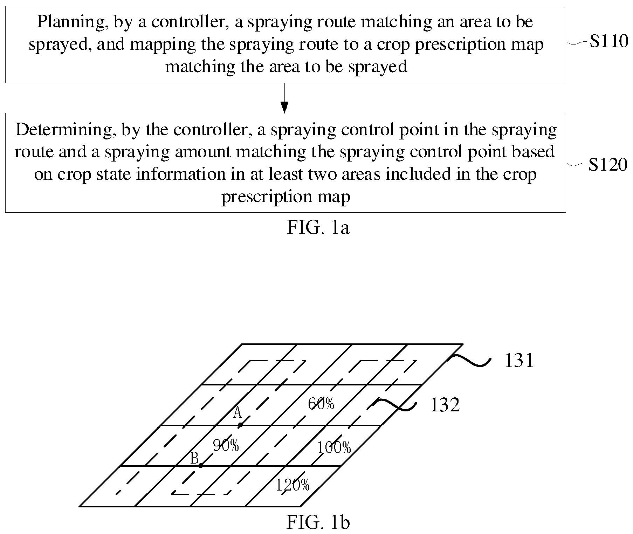

FIG. 1a is a flowchart of a pesticide spraying control method according to Embodiment 1 of the present disclosure. This embodiment may be applied to a case in which an operation unmanned aerial vehicle is controlled to perform a pesticide spraying operation. The method may be performed by a pesticide spraying control apparatus provided in the embodiments of the present disclosure. The apparatus can be implemented in software and/or hardware, and can generally be integrated into an electronic device that provides a function of communication with the operation unmanned aerial vehicle, for example, an unmanned aerial vehicle remote control or server. As shown in FIG. 1a, the method of this embodiment specifically includes:

S110: planning, by a controller, a spraying route matching an area to be sprayed, and mapping the spraying route to a crop prescription map matching the area to be sprayed.

The area to be sprayed may be an area where a spraying operation needs to be performed by an operation unmanned aerial vehicle. Specifically, the area may include an actual entire area of a crop in a geographical space, namely, an actual geographical area, or may include only a local area of a crop that is determined to have pest and weed. The actual geographical area may be determined based on a farmland reclamation condition, or may be determined based on an area enclosed by a farmland fence. A shape of the actual geographical area is usually irregular, not a standard polygon, and the actual geographical area can be intercepted to form a standard shape as the area to be sprayed.

The controller is configured to control flying and a spraying operation of the operation unmanned aerial vehicle, and may be disposed in a ground console of the operation unmanned aerial vehicle or in a handheld terminal of the operation unmanned aerial vehicle.

Optionally, before the planning, by a controller, a spraying route matching an area to be sprayed, the method may further include: obtaining an actual geographic area including a crop to be sprayed; and determining at least one area to be sprayed in the actual geographical area based on the crop state information obtained of each area in the crop prescription map corresponding to the actual geographical area, where an area range of the area to be sprayed is less than or equal to an area range of the actual geographical area.

Specifically, the actual geographical area of the crop to be sprayed is obtained, and an area range corresponding to the crop that need to be sprayed with a pesticide is extracted, based on a crop state (such as a health level of the crop or a pest and weed severity level), from the actual geographical area as the area to be sprayed. The area to be sprayed is determined from the actual geographical area based on the crop state, so that an area not to be sprayed is reduced, thus reducing a redundant route of the spraying route and improving efficiency of the spraying operation.

The spraying route may be a route along which the operation unmanned aerial vehicle flies during a spraying operation, and is generally in a shape of a homocentric square or S. Generally speaking, the spraying route includes longitude, latitude and altitude of each position point forming the spraying route.

Specifically, the spraying route may be determined based on a boundary of the actual geographical area, or only a boundary of a local area of the crop where pest and weed occurs, and an algorithm such as heuristic search (such as A-Star search algorithm), a Voronoi diagram algorithm, a genetic algorithm, an ant colony algorithm and a particle swarm optimization algorithm. In addition, another method may be selected as required to plan the spraying route. The route may be planned only for a pest and weed area, which is not specifically limited in the embodiment of the present disclosure.

The crop prescription map may be a distribution map generated based on distribution of a pest and weed type and pest and weed severity of a crop in an actual map and a prescription type and a prescription dosage for treatment of pest and weed determined based on the distribution. The pest and weed type may include a pest type and a weed type. Accordingly, the prescription type may be determined based on the pest and weed type. For example, if the pest and weed type is a weed, it is determined that a type of at least one pesticide that matches is a weed-killing agent. Based on the pest and weed severity, a spraying dosage of at least one pesticide and a corresponding proportion, namely a prescription dosage, are determined. Specifically, the crop prescription map includes information about the pest and weed type and pest and weed severity of a crop and/or corresponding information about the prescription type and prescription dosage.

Optionally, the crop prescription map specifically includes at least two grid areas, and a pest and weed severity level or a plant density level is separately associated in each grid area as crop state information.

The grid may be obtained by dividing a space into regular meshes, and each mesh serves as a unit. In general, in a crop area, a crop having pest and weed is not evenly distributed in space. The crop area can be divided to form a plurality of grid areas. Based on a state of a crop in each area, the crops are classified according to the pest and weed severity level. Actually, the pest and weed severity level is a relative level. State data of a normal crop can be artificially set according to actual requirements, and then the pest and weed severity level of the crop where pest and weed occurs is determined based on the state data of the crop where pest and weed occurs. For example, the pest and weed severity level may be expressed as a percentage, specifically including 0%, 30%, 60%, 90%, 100%, and 120%. In addition, the pest and weed severity level may be expressed in another way, which is not specifically limited in the embodiment of the present disclosure.

Actually, in this embodiment, a grid is used as a processing unit for storing information about the pest and weed severity level, which can eliminate irrelevant data, reduce redundant data, and improve efficiency of processing information about pest and weed. Moreover, when the operation unmanned aerial vehicle performs pesticide spraying, an operation target is a crop area, and it is impossible and does not need to target each crop accurately for spraying. Therefore, the method of dividing crop prescription map by using grid areas can adapt to pesticide spraying operation of the operation unmanned aerial vehicle, reducing redundant operation and improving pesticide spraying efficiency.

The crop prescription map is divided into a plurality of grid areas, and the pest and weed severity level of each grid area is obtained as the crop state information associated with the grid area, so that the pest and weed severity in different areas can be accurately distinguished. Therefore, precision spraying can be performed on demand based on a condition of pest and weed, improving flexibility of spraying, and avoiding insufficient pesticide dosage or wasteful pollution caused by uniform spraying in an entire area.

It should be noted that the area to be sprayed may be determined based on the crop prescription map and the actual geographical area. Generally, an area including and only including a normal crop may be removed from the actual geographical area to form the area to be sprayed, that is, a size of the area to be sprayed is smaller than or equal to that of the actual geographical area.

Optionally, before the planning, by a controller, a spraying route matching an area to be sprayed, the method may further include: obtaining, by the controller, pest and weed data matching the area to be sprayed, where the pest and weed data includes image data and/or spectral data; dividing, by the controller, the pest and weed data according to grid areas in a standard spatial coordinate system; identifying, by the controller, the pest and weed severity level based on the pest and weed data in each grid area after division; and generating, by the controller, the crop prescription map based on a recognition result for each grid area.

The pest and weed data may be growth data of a crop, and may include image data and/or spectral data by type. Specifically, red, green and blue (RGB) image data or color image data of the crop may be acquired by a color camera, and/or multispectral data of the crop may be acquired by a multispectral camera. The multispectral camera can spread to infrared and ultraviolet light on the basis of visible light, and respectively and simultaneously receive information of a same target radiated or reflected on different narrow spectral bands through a combination of various filters or spectroscopes and various photosensitive films, to obtain the spectral data of several different spectral bands of the target.

The standard spatial coordinate system may be a ground coordinate system or another preset spatial coordinate system. Through the global positioning system or Beidou Navigation Satellite system, geographical position information of the actual geographical area can be obtained according to the standard spatial coordinate system. The pest and weed data collected in the actual geographical area may be divided according to grid areas, so that position information of each grid area in a geographical space, specifically including coordinate positions of four vertices of the grid area, can be determined. A size of the grid area may be set as required, for example, the size of the grid area may be determined based on a flying speed of the operation unmanned aerial vehicle. In addition, the size of the grid area may be determined based on the size of the area to be sprayed, or based on another manner, which is not specifically limited in this embodiment of the present disclosure.

The pest and weed severity level is identified based on the pest and weed data in each grid area after division. Specifically, the pest and weed data in a grid area can be compared with data of a crop without pest and weed, to calculate similarity of the data (such as calculating similarity of two images). The smaller the degree of similarity, the higher the pest and weed severity level, thus detecting the pest and weed severity level. Alternatively, a machine learning model may be trained by using the pest and weed data for pre-labelling the pest and weed severity level to generate a pest and weed severity level detection model. Pest and weed data in each grid area is entered into the pest and weed severity level detection model, to obtain a pest and weed severity level of each grid area. In addition, another method may be used to identify the pest and weed severity level of each grid area, which is not specifically limited in this embodiment of the present disclosure.

According to the identification result of each grid area, the pest and weed type and the pest and weed severity of the crop in each grid area are determined, and a prescription type and prescription dosage of the crop in each grid area are further determined based on the pest and weed type and the pest and weed severity of the crop in each grid area, thereby generating a crop prescription map based on the pest and weed type and the pest and weed severity and/or the prescription type and the prescription dosage for pest and weed of the crop in each grid area.

The pest and weed data of the crop is collected, grid division is performed, and the pest and weed severity level of each grid is identified to obtain the crop prescription map. Distribution of pest and weed can be regionalized, the pest and weed severity can be accurately distinguished, and thus precision spraying can be performed on demand based on a condition of pest and weed.

A position, in the crop prescription map, of each point on the spraying route can be determined by mapping the spraying route to the crop prescription map, so that pest and weed severity of a crop that the operation unmanned aerial vehicle passes can be determined during a spraying operation of the operation unmanned aerial vehicle along the spraying route. That is, a correspondence between a real-time position of the operation unmanned aerial vehicle and pest and weed severity is established, so that a right pesticide is sprayed, that is, spraying is performed based on a spraying amount corresponding to the pest and weed severity level.

S120: determining, by the controller, a spraying control point in the spraying route and a spraying amount matching the spraying control point based on crop state information in at least two areas included in the crop prescription map, where the spraying control point is associated with an actual spraying point of an operation unmanned aerial vehicle; and the actual spraying point is spaced from the spraying control point associated with the actual spraying point by a set distance on the spraying route and is located before the spraying control point associated with the actual spraying point in a forward direction of the operation unmanned aerial vehicle.

The crop state information may be at least one type of information such as a color, a shape, a texture feature, and a state of a pest and an accompanying weed of a crop.

The spraying control point is a position point for determining an actual position of spraying performed by the operation unmanned aerial vehicle, and is a point located on the spraying route, specifically including at least one of position information, longitude information, latitude information and altitude information of the point. Specifically, an intersection point between the spraying route and each grid area may be used as the spraying control point, or an intersection point between the spraying route and a grid area whose pest and weed severity exceeds a set threshold may be used as the spraying control point. In addition, the spraying control point may be determined in another way according to actual requirements, which is not specifically limited in this embodiment of the present disclosure.

The actual spraying point is an actual position point used to indicate that the operation unmanned aerial vehicle performs spraying, and is a point on the spraying route. Actually, according to a flight direction of the operation unmanned aerial vehicle, the actual spraying point is located before the spraying control point, so that a case that a pesticide does not cover a farmland suffering from pest and weed during a pesticide spraying operation of the operation unmanned aerial vehicle is avoided. Specifically, on the spraying route, a position point that is before the spraying control point and whose distance from the spraying control point is a preset distance is selected as an actual spraying point. For example, the preset distance is 3 m, and on the spraying route, a position point that is before each spraying control point and whose distance from the spraying control point is 3 m is used as an actual spraying point associated with each spraying control point.

The spraying amount may be an amount of a sprayed pesticide, which matches the spraying control point and is used to instruct the operation unmanned aerial vehicle to start pesticide spraying with a spraying amount at the actual spraying point associated with the matched spraying control point. Specifically, the spraying amount may be determined based on pest and weed severity, associated with the spraying control point, of a grid area. For example, a prescription amount matching the pest and weed severity, associated with the spraying control point, of a grid area is used as the spraying amount matching the spraying control point.

The spraying control point, actual spraying point and spraying amount are all parameters used by the controller to instruct the operation unmanned aerial vehicle to perform a spraying operation. The controller may directly send the spraying route, the spraying control point and the spraying amount to the operation unmanned aerial vehicle, and the operation unmanned aerial vehicle performs the spraying operation based on the actual spraying point after determining the actual spraying point associated with the spraying control point. Alternatively, the controller determines the associated actual spraying point based on the spraying control point and sends the spraying route, actual spraying point and spraying amount to the operation unmanned aerial vehicle to instruct the operation unmanned aerial vehicle to directly perform the spraying operation.

Optionally, after the determining, by the controller, a spraying control point in the spraying route and a spraying amount matching the spraying control point based on crop state information in at least two areas included in the crop prescription map, the method may further include: sending, by the controller, the spraying route, each of the spraying control points, and the spraying amount matching the spraying control point to the operation unmanned aerial vehicle, so that the operation unmanned aerial vehicle performs pesticide spraying according to the spraying amount matching the associated spraying control point when flying along the spraying route to an actual spraying point at a set distance from each of the spraying control points.

Optionally, after the determining, by the controller, a spraying control point in the spraying route and a spraying amount matching the spraying control point based on crop state information in at least two areas included in the crop prescription map, the method may further include: determining, by the controller in the spraying route, an actual spraying point at a set distance from each of the spraying control points; establishing, by the controller, a correspondence between each actual spraying point and a spraying amount based on the spraying control point; and sending, by the controller, the spraying route, each of the actual spraying points, and the spraying amount corresponding to the actual spraying point to the operation unmanned aerial vehicle, so that the operation unmanned aerial vehicle performs pesticide spraying according to a corresponding spraying amount when flying along the spraying route to each of the actual spraying points.

The controller calculates a parameter for the operation unmanned aerial vehicle to perform a spraying operation, and sends the parameter to the operation unmanned aerial vehicle to instruct the operation unmanned aerial vehicle to perform the spraying operation, so as to facilitate the control end to monitor the operation parameter of the operation unmanned aerial vehicle, ensuring an accurate operation of the operation unmanned aerial vehicle. Besides, operation calculation amount of the operation unmanned aerial vehicle is reduced, and operation efficiency of the operation unmanned aerial vehicle is improved.

Optionally, the determining, by the controller in the spraying route, an actual spraying point at a set distance from each of the spraying control points may include: obtaining, by the controller, at least one speed association parameter of the operation unmanned aerial vehicle on the spraying route; determining, by the controller based on the speed association parameter, a distance value corresponding to each spraying control point; and determining, in the spraying route based on the distance value corresponding to each spraying control point, the actual spraying point at the set distance from each spraying control point.

Specifically, the speed correlation parameter is used to determine a speed of the operation unmanned aerial vehicle on the spraying route. The distance value is used to determine the set distance. Generally speaking, the set distance is greater than or equal to the distance value. A manner of determining the distance value based on the speed association parameter may be specifically to determine a flight speed of an unmanned aerial vehicle based on the speed association parameter and calculate a product of the flight speed and a preset time as the distance value. In addition, the distance value may be determined in another manner, which is not specifically limited in this embodiment of the present disclosure.

In a specific example, the flight speed of the unmanned aerial vehicle determined based on the at least one speed association parameter is 6 meters per second, the unmanned aerial vehicle flies at a constant speed, and the preset time is 0.3 seconds, and thus the distance value is 1.8 meters. The set distance may be set to 2 meters, so that the actual spraying point on the spraying route is a position point that is 2 meters away from the spraying control point.

A distance value corresponding to each spraying control point is determined by using the speed association parameter of the operation unmanned aerial vehicle on the spraying route, and the set distance is determined based on the distance value, so as to determine the actual spraying point. In this case, the actual spraying point is determined based on a flight condition of the operation unmanned aerial vehicle, and a spraying position of the operation unmanned aerial vehicle is adjusted adaptively, so as to adjust pesticide coverage on a farmland, ensure that a pesticide is accurately covered in a pest and weed area, and improve a pesticide spraying effect.

It can be understood that, when the operation unmanned aerial vehicle performs pesticide spraying, the pesticide spraying may be performed according to a spraying amount matched with a spraying control point associated with an actual spraying point located in front of the adjacent actual spraying point during a pesticide spraying operation along a spraying route between every two adjacent actual spraying points. That is, whenever the operation unmanned aerial vehicle reaches an actual spraying point, the spraying amount is adjusted accordingly to match the spraying control point associated with the actual spraying point. The spraying mode may be that spraying is performed in the spraying amount during operation of the spraying route.

In a specific example, as shown in FIG. 1b, crop growth data of an area to be sprayed 131 is divided according to grids. Weed density (namely, a pest and weed severity level) is identified with each grid area as a unit. Identification results are shown in FIG. 1b, where the weed density is 60%, 90%, 100% and 120%, respectively. An operation unmanned aerial vehicle performs a spraying operation is performed along a spraying route 132. In a process from an actual spraying point A to an actual spraying point B, the operation unmanned aerial vehicle performs spraying in an equal amount based on a spraying amount (for example, 90 ml herbicide) matched with a spraying control point associated with the actual spraying point A.

According to the embodiment of the present disclosure, a spraying route is mapped to a crop prescription map to determine a spraying control point on the spraying route and a spraying amount matching each spraying control point. In addition, based on each spraying control point, an actual spraying point on the spraying route and before the spraying control point is determined, so that an unmanned aerial vehicle can spray a pesticide with a spraying amount when arriving at the actual spraying point, which solves the problem in the prior art that a farmland at the spraying control point is not covered with the pesticide due to start of pesticide spraying at the spraying control point, and implements a comprehensive consideration of a flight situation of the unmanned aerial vehicle and a time delay when the pesticide arrives at the farmland. Thus, the pesticide fully covers on the farmland suffering from pest and weed, optimizing the existing pesticide spraying technology, adaptively adjusting the actual spraying position, and ensuring a pesticide spraying effect during adaptive pesticide spraying to the greatest extent.

Embodiment 2

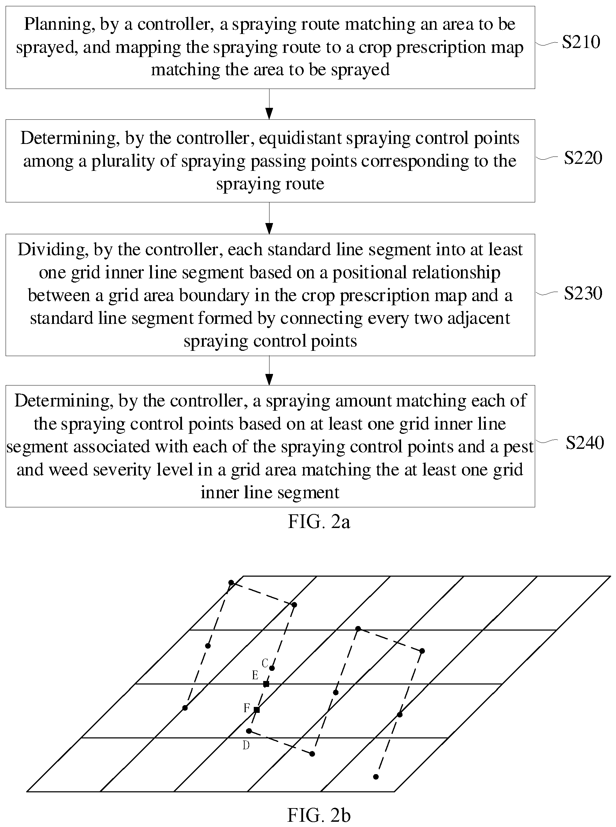

FIG. 2a is a flowchart of a pesticide spraying control method according to Embodiment 2 of this present disclosure. This embodiment is further embodied on the basis of the foregoing embodiment. That is, the crop prescription map specifically includes at least two grid areas, and a pest and weed severity level or a plant density level is separately associated in each grid area as crop state information. In addition, the step of determining, by the controller, a spraying control point in the spraying route and a spraying amount matching the spraying control point based on crop state information in at least two areas included in the crop prescription map is embodied as: determining, by the controller, equidistant spraying control points among a plurality of spraying passing points corresponding to the spraying route; dividing, by the controller, each standard line segment into at least one grid inner line segment based on a positional relationship between a grid area boundary in the crop prescription map and a standard line segment formed by connecting every two adjacent spraying control points; and determining, by the controller, a spraying amount matching each of the spraying control points based on at least one grid inner line segment associated with each of the spraying control points and a pest and weed severity level in a grid area matching the at least one grid inner line segment. The method of this embodiment specifically includes:

S210: planning, by a controller, a spraying route matching an area to be sprayed, and mapping the spraying route to a crop prescription map matching the area to be sprayed. The crop prescription map specifically includes at least two grid areas, and a pest and weed severity level or a plant density level is separately associated in each grid area as crop state information.

It should be noted that the area to be sprayed, the spraying route, the crop prescription map, the crop state information, the grid area, the spraying control point, the actual spraying point, and the spraying amount in this embodiment can all be referred to the description of the foregoing embodiment.

S220: determining, by the controller, equidistant spraying control points among a plurality of spraying passing points corresponding to the spraying route.

Generally speaking, the spraying route is actually formed by connecting a plurality of position points, and each position point is a spraying passing point. The equidistant spraying control points may be understood as that distances between every two adjacent spraying control points are equal. The equidistant spraying control points can be obtained by extracting a plurality of spraying passing points having an equal spacing from a plurality of spraying passing points; or can be determined based on a start point and an ending point of the spraying route, and spacing of control points determined based on a response time and a flight speed of the operation unmanned aerial vehicle. In addition, the equidistant spraying control points may be determined in another manner, which is not specifically limited in this embodiment of the present disclosure.

Optionally, the determining, by the controller, equidistant spraying control points among a plurality of spraying passing points corresponding to the spraying route may include: obtaining, by the controller, a received signal response time and a flight speed, and determining a control point spacing based on a route distance between a spraying start point and a spraying end point; extracting, by the controller, the spraying start point and the spraying end point from the plurality of spraying passing points corresponding to the spraying route, and using both as the spraying control points; and separately determining, by the controller, each spraying control point on a spraying route between the spraying start point and the spraying end point based on the control point spacing, where a route distance between every two adjacent spraying control points is equal to the control point spacing.

The received signal response time may be a delay time during which the operation unmanned aerial vehicle performs a spraying operation. The control point spacing is greater than or equal to a product of the received signal response time and the flight speed, to ensure that a pesticide spraying operation is actually started before the operation unmanned aerial vehicle reaches a next spraying control point, avoiding a case that too small control point spacing results in that the operation unmanned aerial vehicle has not started pesticide spraying yet and has reached the next spraying control point.

The spraying start point may be a start point of the spraying route, or may be a target start point for starting execution of a spraying instruction. The spraying end point may be an end point of the spraying route, or may be a target end point for ending execution of a spraying instruction.

Another spraying control point may be sequentially determined based on the spraying start point and the control point spacing. For example, on a spraying route between the spraying start point and the spraying end point, the spraying start point is taken as the target spraying control point. A position point, on the spraying route, whose distance from the target spraying control point is the control point spacing is taken as a next target spraying control point. By analogy, another spraying control point is determined.

Based on the received signal response time, the flight speed and the plurality of spraying passing points on the spraying route, the equidistant spraying control points are determined. Adaptively, the spraying control point can be determined timely and accurately based on an operation parameter of the operation unmanned aerial vehicle, and the spraying control point can be adjusted flexibly to improve flexibility of operation of the operation unmanned aerial vehicle.

S230: dividing, by the controller, each standard line segment into at least one grid inner line segment based on a positional relationship between a grid area boundary in the crop prescription map and a standard line segment formed by connecting every two adjacent spraying control points.

Specifically, the standard line segment may be located in one grid area or may intersect with at least two grid areas. When the standard line segment is located in one grid area, a pest and weed severity level matching the standard line segment is determined only based on a pest and weed severity level matching the grid area, thereby determining a spraying amount of the standard line segment. When the standard line segment intersects with at least two grid areas, it is necessary to comprehensively consider pest and weed severity levels matching the at least two grid areas. Thus, it is necessary to determine a proportion of the standard line segment in each grid area, which can be specifically determined by dividing the standard line segment based on an area range of each grid area. The grid inner line segment may be a portion of a standard line segment in a grid area.

Optionally, the dividing each standard line segment into at least one grid inner line segment based on a positional relationship between a grid area boundary in the crop prescription map and a standard line segment formed by connecting every two adjacent spraying control points includes: when determining that the grid area boundary in the crop prescription map intersects with the standard line segment formed by connecting two adjacent spraying control points, obtaining, by the controller, at least one intersection point of the standard line segment and the grid area boundary, respectively extracting two adjacent points from the two adjacent spraying control points and the at least one intersection point, and connecting the two adjacent points to form at least two grid inner line segments; or when determining that there is no intersection point between the grid area boundary in the crop prescription map and the standard line segment formed by connecting two adjacent spraying control points, using, by the controller, the standard line segment as a grid inner line segment.

In a specific example, as shown in FIG. 2b, two adjacent spraying control points C and D are respectively located in different grid areas, and intersection points between the grid area boundary and a standard line segment CD formed by connecting the spraying control point C and the spraying control point D are respectively a point E and a point F. The point E is adjacent to the spraying control point C and the point F, and the spraying control point D is only adjacent to the point F. In this case, it is determined that a line segment CE, a line segment EF and a line segment FD are grid inner line segments.

The grid inner line segment is correspondingly determined depending on a positional relationship of intersection or nonintersection between the standard line segment and the grid area boundary in the crop prescription map, so that the line segment can be accurately divided according to the grid area.

S240: determining, by the controller, a spraying amount matching each of the spraying control points based on at least one grid inner line segment associated with each of the spraying control points and a pest and weed severity level in a grid area matching the at least one grid inner line segment. The spraying control point is associated with an actual spraying point of an operation unmanned aerial vehicle; and the actual spraying point is spaced from the spraying control point associated with the actual spraying point by a set distance on the spraying route and is located before the spraying control point associated with the actual spraying point in a forward direction of the operation unmanned aerial vehicle.

Specifically, at least one grid inner line segment associated with each of the spraying control points may be at least one grid inner line segment that matches a standard line segment formed by connecting each spraying control point with an adjacent next (or previous) spraying control point. The grid area matching the grid inner line segment may be a grid area in which the grid inner line segment is located. Pest and weed severity levels in grid areas in which grid inner line segments corresponding to a standard line segment formed by connecting two adjacent spraying control points are located can be weighted and summed to determine a spraying amount matched with the standard line segment, and the weight may be a proportion of each grid inner line segment to the standard line segment.

Optionally, the determining, by the controller, a spraying amount matching each of the spraying control points based on at least one grid inner line segment associated with each of the spraying control points and a pest and weed severity level in a grid area matching the at least one grid inner line segment includes:
The controller calculates a spraying amount $V_i$ of the $i^{th}$ spraying control point on the spraying route based on the following formula:

$$V_i = \sum_{k=1}^{n} \left( \frac{l_k}{L_i} P_k \right)$$

where $l_k$ is a length of the $k^{th}$ grid inner line segment, $P_k$ is a pest and weed severity level of a grid area where the $k^{th}$ grid inner line segment is located, $L_i$ is a length of a standard line segment connecting the $i^{th}$ spraying control point and the $(i+1)^{th}$ spraying control point, and $n$ is a quantity of grid inner line segments divided by a standard line segment connecting the $i^{th}$ spraying control point and the $(i+1)^{th}$ spraying control point.

Specifically, a product of a ratio of a length of each grid inner line segment to a length of an associated standard line segment and a pest and weed severity level of the grid area where the grid inner line segment is located is used as a pest and weed severity level matching the grid inner line segment, to further sum up each of pest and weed severity levels matching each grid inner line segment divided by the standard line segment, so as to determine a spraying amount matched with the standard line segment, realizing determination of a spraying amount based on a pest and weed severity level matching each of grid areas covered by the standard line segment. That is, based on a pest and weed severity level of a grid area that the operation unmanned aerial vehicle passes, a spraying amount on the spraying route corresponding to the standard line segment that the operation unmanned aerial vehicle passes is determined, so as to accurately determine a pesticide demand, thereby implementing adaptive adjustment of the spraying amount as required.

According to the embodiment of the present disclosure, the equidistant spraying control points are determined based on spraying passing points on the spraying route, and a distance between spraying control points can be reasonably planned according to actual requirements, so as to ensure that the operation unmanned aerial vehicle completes a spraying operation requirement between every two adjacent spraying control points, and a redundant and unreasonable spraying control point can also be avoided. In addition, the standard line segment formed by connecting two adjacent spraying control points is divided into at least one grid inner line segment based on a boundary of each grid area, and the spraying amount matched with each spraying control point is determined based on a pest and weed severity level in the grid area respectively matched with the at least one grid inner line segment, so as to adaptively adjust the spraying amount based on distribution of each spraying control point in each grid area, thereby implementing accurate and flexible pesticide spraying performed by the operation unmanned aerial vehicle, and avoiding waste and pollution caused by excessive application of pesticides.

Embodiment 3

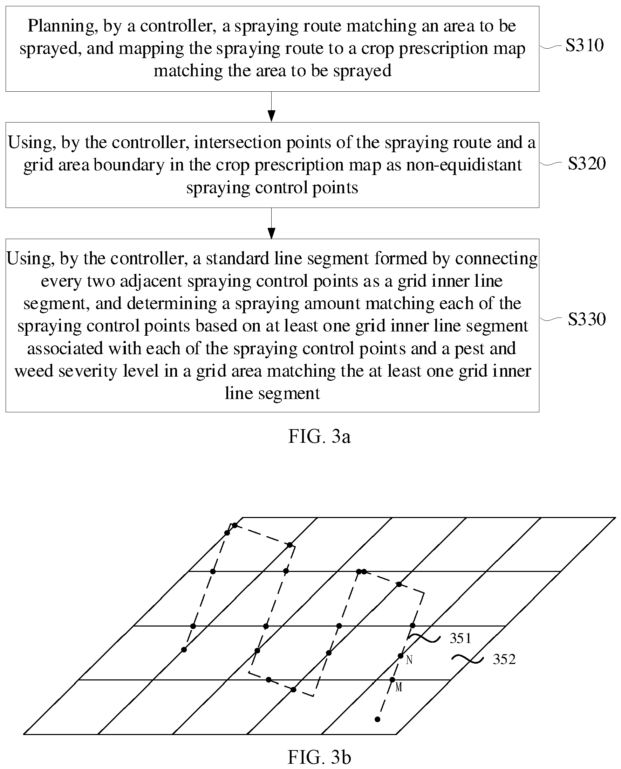

FIG. 3a is a flowchart of a pesticide spraying control method according to Embodiment 3 of the present disclosure. This embodiment is further embodied on the basis of the foregoing embodiment. That is, the crop prescription map specifically includes at least two grid areas, and a pest and weed severity level or a plant density level is separately associated in each grid area as crop state information. In addition, the step of determining, by the controller, a spraying control point in the spraying route and a spraying amount matching the spraying control point based on crop state information in at least two areas included in the crop prescription map is embodied as: using, by the controller, intersection points of the spraying route and a grid area boundary in the crop prescription map as non-equidistant spraying control points; and using, by the controller, a standard line segment formed by connecting every two adjacent spraying control points as a grid inner line segment, and determining a spraying amount matching each of the spraying control points based on at least one grid inner line segment associated with each of the spraying control points and a pest and weed severity level in a grid area matching the at least one grid inner line segment. The method of this embodiment specifically includes:
S310: planning, by a controller, a spraying route matching an area to be sprayed, and mapping the spraying route to a crop prescription map matching the area to be sprayed. The crop prescription map specifically includes at least two grid areas, and a pest and weed severity level or a plant density level is separately associated in each grid area as crop state information.

It should be noted that the area to be sprayed, the spraying route, the crop prescription map, the crop state information, the grid area, the spraying control point, the actual spraying point, and the spraying amount in this embodiment can all be referred to the description of the foregoing embodiment.

S320: using, by the controller, intersection points of the spraying route and a grid area boundary in the crop prescription map as non-equidistant spraying control points.

In a specific example, as shown in FIG. 3b, an intersection point M and an intersection point N of a spraying route 351 and the boundary line of a grid area 352 are the spraying control points.

S330: using, by the controller, a standard line segment formed by connecting every two adjacent spraying control points as a grid inner line segment, and determining a spraying amount matching each of the spraying control points based on at least one grid inner line segment associated with each of the spraying control points and a pest and weed severity level in a grid area matching the at least one grid inner line segment. The spraying control point is associated with an actual spraying point of an operation unmanned aerial vehicle; and the actual spraying point is spaced from the spraying control point associated with the actual spraying point by a set distance on the spraying route and is located before the spraying control point associated with the actual spraying point in a forward direction of the operation unmanned aerial vehicle.

Specifically, the at least one grid inner line segment associated with the spraying control point may be a standard line segment formed by connecting the spraying control point with an adjacent next (and/or previous) spraying control point. When intersection points between the spraying route and the grid area boundary are used as the spraying control points, a standard line segment formed by connecting every two adjacent spraying control points is in the grid area, so that a spraying amount matching the spraying control points for forming a standard line segment can be directly determined based on a pest and weed severity level matching the grid area.

Optionally, the determining, by the controller, a spraying amount matching each of the spraying control points based on at least one grid inner line segment associated with each of the spraying control points and a pest and weed severity level in a grid area matching the at least one grid inner line segment includes:
calculating, by the controller, a spraying amount $V_i$ of the $i^{th}$ spraying control point on the spraying route based on the following formula:

$$V_i = P_i$$

where $P_i$ is a pest and weed severity level of a grid area where the $i^{th}$ grid inner line segment is located.

Specifically, the intersection points between the spraying route and the grid area boundary are used as the spraying control points. That is, a standard line segment formed by connecting every two adjacent spraying control points is merely in one grid area, so that the pest and weed severity level of the grid area where the grid inner line segment is located can be directly used as the spraying amount of the spraying control point, thereby reducing difficulty of calculating the spraying amount.

According to the embodiment of the present disclosure, the intersection points between the spraying route and the grid area boundary are used as the spraying control points, and the spraying amount of a spraying control point is directly determined based on the pest and weed severity level of the grid area where the standard line segment formed by connecting every two adjacent spraying control points is located, so that calculation difficulty of determining the spraying control points and the spraying amount can be reduced, and a data amount for calculation is reduced, thereby improving processing efficiency of the spraying operation.

Embodiment 4

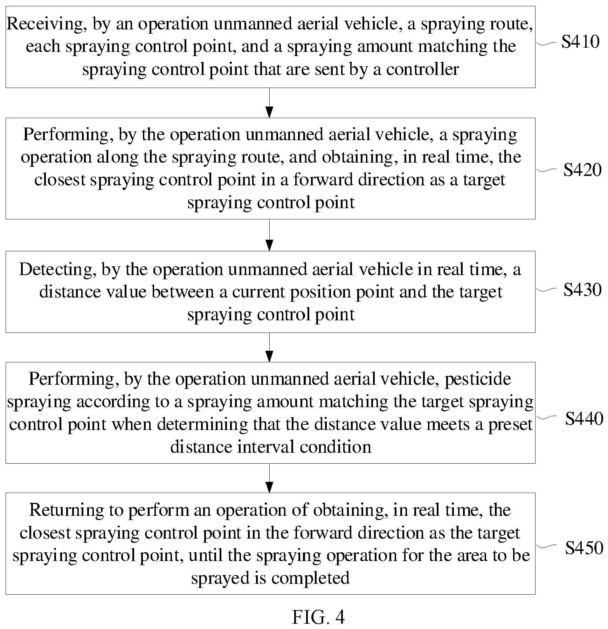

FIG. 4 is a flowchart of a pesticide spraying control method according to Embodiment 4 of the present disclosure. This embodiment may be applied to a case in which an operation unmanned aerial vehicle performs a pesticide spraying operation. The method may be performed by a pesticide spraying control apparatus provided in the embodiments of the present disclosure. The apparatus can be implemented in software and/or hardware, and can generally be integrated into the operation unmanned aerial vehicle. As shown in FIG. 4, the method of this embodiment specifically includes:
S410: receiving, by an operation unmanned aerial vehicle, a spraying route, each spraying control point, and a spraying amount matching the spraying control point that are sent by a controller, where the spraying control point and the spraying amount are determined by the controller based on crop state information in at least two areas included in a crop prescription map after the controller maps a planned spraying route to the crop prescription map matching an area to be sprayed.

It should be noted that the area to be sprayed, the spraying route, the crop prescription map, the crop state information, the area, the spraying control point, the actual spraying point, and the spraying amount in this embodiment can all be referred to the description of the foregoing embodiment.

S420: performing, by the operation unmanned aerial vehicle, a spraying operation along the spraying route, and obtaining, in real time, the closest spraying control point in a forward direction as a target spraying control point.

The closest spraying control point obtained in real time in the forward direction may be a spraying control point that the operation unmanned aerial vehicle has not yet arrived at and is closest to the real-time position of the operation unmanned aerial vehicle.

S430: detecting, by the operation unmanned aerial vehicle in real time, a distance value between a current position point and the target spraying control point.

Coordinates of the current position point and coordinates of the target spraying control point can be obtained, and a horizontal distance between the two coordinates can be calculated as the distance value. The coordinates may be space coordinates or plane coordinates (not including height).

S440: performing, by the operation unmanned aerial vehicle, pesticide spraying according to a spraying amount matching the target spraying control point when determining that the distance value meets a preset distance interval condition.

The distance interval condition is used to limit a range of distance or a certain distance value at which the operation unmanned aerial vehicle start performing a pesticide spraying operation. For example, the distance interval condition is 3 m, and when the distance value is equal to 3 m, it is determined that the preset distance interval condition is met. The distance interval condition may be determined based on a real-time speed association parameter of the operation unmanned aerial vehicle. For example, a correspondence between the real-time speed association parameter and the distance interval condition may be established in advance based on an empirical value, and the distance interval condition is determined based on the real-time speed association parameter of the operation unmanned aerial vehicle.

When the operation unmanned aerial vehicle leaves an area with a high pest and weed severity level, a spraying function can be turned off or a spraying amount can be reduced, and a time can be controlled in advance.

S450: returning to perform an operation of obtaining, in real time, the closest spraying control point in the forward direction as the target spraying control point, until the spraying operation for the area to be sprayed is completed.

According to the embodiment of the present disclosure, a distance value between the current position point and the closest spraying control point is detected in real time, and when the distance value meets the distance interval condition, the pesticide spraying operation is started at the current position point according to a spraying amount matching the spraying control point, so as to perform the pesticide spraying operation in advance before the spraying control point, enabling a pesticide to fully cover a farmland where the pesticide needs to be sprayed and improving a pesticide spraying effect. In addition, the operation unmanned aerial vehicle calculates an actual spraying point in real time, so that an operation condition of the operation unmanned aerial vehicle can be adjusted in time, thereby improving flexibility of the pesticide operation.

Embodiment 5

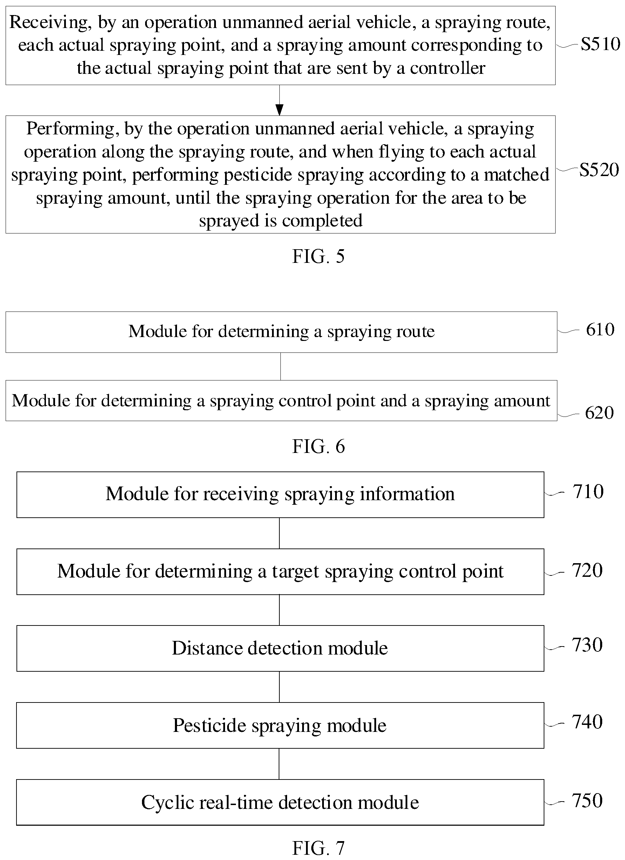

FIG. 5 is a flowchart of a pesticide spraying control method according to Embodiment 5 of the present disclosure. This embodiment may be applied to a case in which an operation unmanned aerial vehicle performs a pesticide spraying operation. The method may be performed by a pesticide spraying control apparatus provided in the embodiments of the present disclosure. The apparatus can be implemented in software and/or hardware, and can generally be integrated into the operation unmanned aerial vehicle. As shown in FIG. 5, the method of this embodiment specifically includes:

S510: receiving, by an operation unmanned aerial vehicle, a spraying route, each actual spraying point, and a spraying amount corresponding to the actual spraying point that are sent by a controller, where the actual spraying point and the spraying amount are determined by the controller based on a spraying control point, a spraying amount and a preset distance that are determined based on crop state information in at least two areas included in a crop prescription map after the controller maps a planned spraying route to the crop prescription map matching an area to be sprayed.

It should be noted that the area to be sprayed, the spraying route, the crop prescription map, the crop state information, the area, the spraying control point, the actual spraying point, and the spraying amount in this embodiment can all be referred to the description of the foregoing embodiment.

S520: performing, by the operation unmanned aerial vehicle, a spraying operation along the spraying route, and when flying to each actual spraying point, performing pesticide spraying according to a matched spraying amount, until the spraying operation for the area to be sprayed is completed.

According to the embodiment of the present disclosure, pesticide spraying is performed at an actual spraying point before the spraying control point, so as to perform the pesticide spraying operation in advance before the spraying control point, enabling a pesticide to fully cover a farmland where the pesticide needs to be sprayed and improving a pesticide spraying effect. In addition, the actual spraying point sent by the controller is directly obtained for the pesticide spraying operation, preventing the operation unmanned aerial vehicle from determining the actual spraying point, and improving operating efficiency of the operation unmanned aerial vehicle.

Embodiment 6

FIG. 6 is a schematic diagram of a pesticide spraying control apparatus according to Embodiment 6 of the present disclosure. Embodiment 6 describes a corresponding apparatus implementing the pesticide spraying control methods provided in the foregoing embodiments of the present disclosure. The apparatus is disposed in a controller that is connected to an operation unmanned aerial vehicle in communication.

Correspondingly, the apparatus in this embodiment may include:

    a module for determining a spraying route 610, configured to plan a spraying route matching an area to be sprayed, and map the spraying route to a crop prescription map matching the area to be sprayed; and
    a module for determining a spraying control point and a spraying amount 620, configured to determine a spraying control point in the spraying route and a spraying amount matching the spraying control point based on crop state information in at least two areas included in the crop prescription map, where the spraying control point is associated with an actual spraying point of an operation unmanned aerial vehicle; and the actual spraying point is spaced from the spraying control point associated with the actual spraying point by a set distance on the spraying route and is located before the spraying control point associated with the actual spraying point in a forward direction of the operation unmanned aerial vehicle.

According to the embodiment of the present disclosure, a spraying route is mapped to a crop prescription map to determine a spraying control point on the spraying route and a spraying amount matching each spraying control point, which solves problems of cost waste and environmental pollution due to over-application of a pesticide caused by fully uniform spraying of the pesticide in the prior art. The spraying amount can be adaptively adjusted according to a condition of a farmland suffering from pest and weed, to avoid excessive application of the pesticide, and reduce costs of pesticide spraying.

Further, the crop prescription map specifically includes at least two grid areas, and a pest and weed severity level or a plant density level is separately associated in each grid area as crop state information.

Further, the pesticide spraying control apparatus is specifically configured to: obtain pest and weed data matching the area to be sprayed, where the pest and weed data includes image data and/or spectral data; divide the pest and weed data according to grid areas in a standard spatial coordinate system; identify the pest and weed severity level based on pest and weed data in each grid area after division; and generate the crop prescription map based on a recognition result for each grid area.

Further, the module for determining a spraying control point and a spraying amount 620 is specifically configured to: determine equidistant spraying control points among a plurality of spraying passing points corresponding to the spraying route; divide each standard line segment into at least one grid inner line segment based on a positional relationship between a grid area boundary in the crop prescription map and a standard line segment formed by connecting every two adjacent spraying control points; and determine a spraying amount matching each of the spraying control points based on at least one grid inner line segment associated with each of the spraying control points and a pest and weed severity level in a grid area matching the at least one grid inner line segment.

Further, the module for determining a spraying control point and a spraying amount 620 is specifically configured to: obtain a received signal response time and a flight speed, and determine a control point spacing based on a route distance between a spraying start point and a spraying end point; extract the spraying start point and the spraying end point from the plurality of spraying passing points corresponding to the spraying route, and use both as the spraying control points; and separately determine each spraying control point on a spraying route between the spraying start point and the spraying end point based on the control point spacing, where a route distance between every two adjacent spraying control points is equal to the control point spacing.

Further, the module for determining a spraying control point and a spraying amount 620 is specifically configured to: when determining that the grid area boundary in the crop prescription map intersects with the standard line segment formed by connecting two adjacent spraying control points, obtain at least one intersection point of the standard line segment and the grid area boundary, respectively extract two adjacent points from the two adjacent spraying control points and the at least one intersection point, and connect the two adjacent points to form at least two grid inner line segments; or when determining that there is no intersection point between the grid area boundary in the crop prescription map and the standard line segment formed by connecting two adjacent spraying control points, use the standard line segment as a grid inner line segment.

Further, the module for determining a spraying control point and a spraying amount 620 is specifically configured to calculate a spraying amount $V_i$ of the $i^{th}$ spraying control point on the spraying route based on the following formula:

$$V_i = \sum_{k=1}^{n} \left( \frac{l_k}{L_i} P_k \right)$$

where $l_k$ is a length of the $k^{th}$ grid inner line segment, $P_k$ is a pest and weed severity level of a grid area where the $k^{th}$ grid inner line segment is located, $L_i$ is a length of a standard line segment connecting the $i^{th}$ spraying control point and the $(i+1)^{th}$ spraying control point, and n is a quantity of grid inner line segments divided by a standard line segment connecting the $i^{th}$ spraying control point and the $(i+1)^{th}$ spraying control point.

Further, the module for determining a spraying control point and a spraying amount 620 is specifically configured to: use intersection points of the spraying route and a grid area boundary in the crop prescription map as non-equidistant spraying control points; and use a standard line segment formed by connecting every two adjacent spraying control points as a grid inner line segment, and determine a spraying amount matching each of the spraying control points based on at least one grid inner line segment associated with each of the spraying control points and a pest and weed severity level in a grid area matching the at least one grid inner line segment.

Further, the module for determining a spraying control point and a spraying amount 620 is specifically configured to calculate a spraying amount $V_i$ of the $i^{th}$ spraying control point on the spraying route based on the following formula:

$$V_i = P_i$$

where $P_i$ is a pest and weed severity level of a grid area where the $i^{th}$ grid inner line segment is located.

Further, the pesticide spraying control apparatus is specifically configured to: obtain an actual geographic area including a crop to be sprayed; and determine at least one area to be sprayed in the actual geographical area based on the crop state information obtained of each area in the crop prescription map corresponding to the actual geographical area, where an area range of the area to be sprayed is less than or equal to an area range of the actual geographical area.

Further, the pesticide spraying control apparatus is specifically configured to: send the spraying route, each of the spraying control points, and the spraying amount matching the spraying control point to the operation unmanned aerial vehicle, so that the operation unmanned aerial vehicle performs pesticide spraying according to the spraying amount matching the associated spraying control point when flying along the spraying route to an actual spraying point at a set distance from each of the spraying control points.

Further, the pesticide spraying control apparatus is specifically configured to: determine, by the controller in the spraying route, an actual spraying point at a set distance from each of the spraying control points; establish, by the controller, a correspondence between each actual spraying point and a spraying amount based on the spraying control point; and send, by the controller, the spraying route, each of the actual spraying points, and the spraying amount corresponding to the actual spraying point to the operation unmanned aerial vehicle, so that the operation unmanned aerial vehicle performs pesticide spraying according to a corresponding spraying amount when flying along the spraying route to each of the actual spraying points.

Further, the pesticide spraying control apparatus is specifically configured to: obtain, by the controller, at least one speed association parameter of the operation unmanned aerial vehicle on the spraying route; determine, by the controller based on the speed association parameter, a distance value corresponding to each spraying control point; and determine, in the spraying route based on the distance value corresponding to each spraying control point, the actual spraying point at the set distance from each spraying control point.

The foregoing pesticide spraying control apparatus can perform the pesticide spraying control method according to any embodiment of the disclosure, and has functional modules and beneficial effects for performing corresponding pesticide spraying control method.

## Embodiment 7

FIG. 7 is a schematic diagram of a pesticide spraying control apparatus according to Embodiment 7 of the present disclosure. Embodiment 7 describes a corresponding apparatus implementing the pesticide spraying control methods provided in the foregoing embodiments of the present disclosure. The apparatus is disposed in an operation unmanned aerial vehicle.

Specifically, the apparatus in this embodiment specifically includes:

a module for receiving spraying information 710, configured to receive a spraying route, each spraying control point, and a spraying amount matching the spraying control point that are sent by a controller, where the spraying control point and the spraying amount are determined by the controller based on crop state information in at least two areas included in a crop prescription map after the controller maps a planned spraying route to the crop prescription map matching an area to be sprayed;

a module for determining a target spraying control point 720, configured to perform a spraying operation along the spraying route, and obtain, in real time, the closest spraying control point in a forward direction as the target spraying control point;

a distance detection module 730, configured to detect, in real time, a distance value between a current position point and the target spraying control point;

a pesticide spraying module 740, configured to perform pesticide spraying according to a spraying amount matching the target spraying control point when it is determined that the distance value meets a preset distance interval condition; and

a cyclic real-time detection module 750, configured to return to perform an operation of obtaining, in real time, the closest spraying control point in the forward direction as the target spraying control point, until the spraying operation for the area to be sprayed is completed.

According to the embodiment of the present disclosure, a distance value between the current position point and the closest spraying control point is detected in real time, and when the distance value meets the distance interval condition, the pesticide spraying operation is started at the current position point according to a spraying amount matching the spraying control point, so as to perform the pesticide spraying operation in advance before the spraying control point, enabling a pesticide to fully cover a farmland where the pesticide needs to be sprayed and improving a pesticide spraying effect. In addition, the operation unmanned aerial vehicle calculates an actual spraying point in real time, so that an operation condition of the operation unmanned aerial vehicle can be adjusted in time, thereby improving flexibility of the pesticide operation.

The foregoing pesticide spraying control apparatus can perform the pesticide spraying control method according to any embodiment of the disclosure, and has functional modules and beneficial effects for performing corresponding pesticide spraying control method.

## Embodiment 8

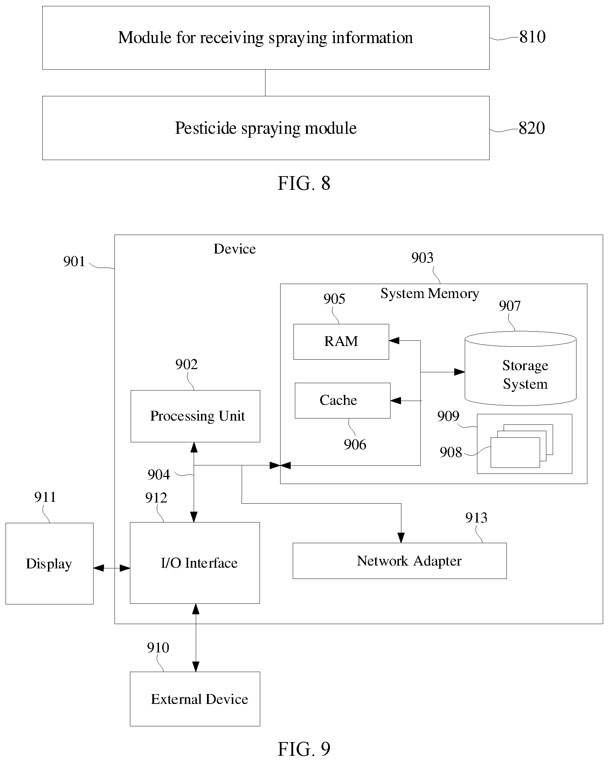

FIG. 8 is a schematic diagram of a pesticide spraying control apparatus according to Embodiment 8 of the present disclosure. Embodiment 8 describes a corresponding apparatus implementing the pesticide spraying control methods provided in the foregoing embodiments of the present disclosure. The apparatus is disposed in an operation unmanned aerial vehicle.

Specifically, the apparatus in this embodiment specifically includes:

a module for receiving spraying information 810, configured to receive a spraying route, each actual spraying point, and a spraying amount corresponding to the actual spraying point that are sent by a controller, where the actual spraying point and the spraying amount are determined by the controller based on a spraying control point, a spraying amount and a preset distance that are determined based on crop state information in at least two areas included in a crop prescription map after the controller maps a planned spraying route to the crop prescription map matching an area to be sprayed; and

a pesticide spraying module 820, configured to perform a spraying operation along the spraying route, and when flying to each actual spraying point, perform pesticide spraying according to a matched spraying amount, until the spraying operation for the area to be sprayed is completed.

According to the embodiment of the present disclosure, pesticide spraying is performed at an actual spraying point before the spraying control point, so as to perform the pesticide spraying operation in advance before the spraying control point, enabling a pesticide to fully cover a farmland where the pesticide needs to be sprayed and improving a pesticide spraying effect. In addition, the actual spraying point sent by the controller is directly obtained for the pesticide spraying operation, preventing the operation unmanned aerial vehicle from determining the actual spraying point, and improving operating efficiency of the operation unmanned aerial vehicle.

The foregoing pesticide spraying control apparatus can perform the pesticide spraying control method according to any embodiment of the disclosure, and has functional modules and beneficial effects for performing corresponding pesticide spraying control method.

Embodiment 9

FIG. 9 is a schematic structural diagram of a device according to Embodiment 9 of the present disclosure. FIG. 9 illustrates a block diagram of an exemplary device 901 suitable for implementing an embodiment of the present disclosure. The apparatus 901 shown in FIG. 9 is merely an example and should not impose any limitation on the functionality and scope of use of the embodiment of the present disclosure.

As shown in FIG. 9, the device 901 is represented in the form of a general-purpose computing device. Components of the device 901 may include, but are not limited to, one or more processors or processing units 902, a system memory 903, and a bus 904 connecting different system components, including the system memory 903 and the processing unit 902.

The bus 904 represents one or more of several types of bus structures, including a memory bus or memory controller, a peripheral bus, a graphics acceleration port, a processor, or a local bus using any of a variety of bus structures. For example, these architectures include, but are not limited to, an industry standard architecture (Industry Standard Architecture, ISA) bus, a micro channel architecture (Micro Channel Architecture, MCA) bus, an enhanced ISA bus, a video electronics standards association (Video Electronics Standards Association, VESA) local bus, and a peripheral component interconnect (Peripheral Component Interconnect, PCI) bus.

The device 901 typically includes a variety of computer system-readable media. These media may be any available media that can be accessed by the device 901, including a volatile medium, a non-volatile medium, a removable medium, and a non-removable medium.

The system memory 903 may include a computer system-readable medium in a form of volatile memory, such as a random access memory (Random Access Memory, RAM) 905 and/or a cache 906. The device 901 may further include another removable or non-removable computer system storage medium, and another volatile or non-volatile computer system storage medium. For example only, a storage system 907 may be configured to read and write a non-removable and non-volatile magnetic medium (not shown in FIG. 9, commonly referred to as "hard disk drive"). Although not shown in FIG. 9, a disk drive configured to read and write a removable non-volatile disk (for example, a soft disk) and an optical disk drive configured to read and write a removable non-volatile disk (for example, a compact disk read-only memory (Compact Disc Read-Only Memory, CD-ROM), a digital video disk read-only memory (Digital Video Disc-Read Only Memory, DVD-ROM), or another optical medium) may be provided. In these cases, each drive may be connected to the bus 904 through one or more data media interfaces. The system memory 903 may include at least one program product having a set of program modules (for example, at least one program module), and the program modules are configured to perform the functions of the embodiments of the present disclosure.

A program or utility 909, having a set of program modules 908 (at least one program module), may be stored in, for example, the system memory 903. Such program module 908 includes, but not limited to, an operating system, one or more application programs, another program module, and program data. Each or some combination of these examples may include an implementation of a network environment. The program module 908 generally performs the functions and/or methods in the embodiments described in the present disclosure.

Alternatively, the device 901 may communicate with one or more external devices 910 (for example, a keyboard, and a pointing device); or communicate with one or more devices (such as a display 911 in FIG. 9) that enable a user to interact with the device 901; and/or communicate with any device (such as a network card, and modem) that enables the device 901 to communicate with one or more other computing devices. Such communication may occur via an input/output (Input/Output, I/O) interface 912. Alternatively, the device 901 may communicate with one or more networks (such as a local area network (Local Area Network, LAN), a wide area network (Wide Area Network, WAN), and/or a public network, such as the Internet) through a network adapter 913. As shown in the figure, the network adapter 913 communicates with other modules of the device 901 via the bus 904. It should be understand that, although not shown in FIG. 9, another hardware and/or software module may be used in combination with the device 901, including, but not limited to, microcode, a device drive, a redundant processing unit, an external disk drive array, a redundant arrays of inexpensive disks (Redundant Arrays of Inexpensive Disks, RAID) system, a tape drive, a data backup storage system, and the like.

The processing unit 902 executes, by running the programs stored in the system memory 903, various functional applications and data processing, for example, implements the pesticide spraying control method provided in the embodiments of the present disclosure.

Embodiment 10

Embodiment 10 of the present disclosure provides a computer readable storage medium, storing a computer program thereon. When the program is executed by a processor, the pesticide spraying control methods provided in all embodiments of the present application are implemented.

That is, when the program is executed by a processor, the following steps are implemented: planning, by a controller, a spraying route matching an area to be sprayed, and mapping the spraying route to a crop prescription map matching the area to be sprayed; and determining, by the controller, a spraying control point in the spraying route and a spraying amount matching the spraying control point based on crop state information in at least two areas included in the crop prescription map, where the spraying control point is associated with an actual spraying point of an operation unmanned aerial vehicle; and the actual spraying point is spaced from the spraying control point associated with the actual spraying point by a set distance on the spraying route and is located before the spraying control point associated with the actual spraying point in a forward direction of the operation unmanned aerial vehicle.

Alternatively, when the program is executed by a processor, the following steps are implemented: receiving, by an operation unmanned aerial vehicle, a spraying route, each spraying control point, and a spraying amount matching the spraying control point that are sent by a controller, where the spraying control point and the spraying amount are determined by the controller based on crop state information in at least two areas included in a crop prescription map after the controller maps a planned spraying route to the crop prescription map matching an area to be sprayed; performing, by the operation unmanned aerial vehicle, a spraying operation along the spraying route, and obtaining, in real time, the closest spraying control point in a forward direction as a target spraying control point; detecting, by the operation unmanned aerial vehicle in real time, a distance value between a current position point and the target spraying control point; performing, by the operation unmanned aerial vehicle, pesticide spraying according to a spraying amount matching the target spraying control point when determining that the distance value meets a preset distance interval condition; and returning to perform an operation of obtaining, in real time, the closest spraying control point in the forward direction as a target spraying control point, until the spraying operation for the area to be sprayed is completed.

Alternatively, when the program is executed by a processor, the following steps are implemented: receiving, by an operation unmanned aerial vehicle, a spraying route, each actual spraying point, and a spraying amount corresponding to the actual spraying point that are sent by a controller, where the actual spraying point and the spraying amount are determined by the controller based on a spraying control point, a spraying amount and a preset distance that are determined based on crop state information in at least two areas included in a crop prescription map after the controller maps a planned spraying route to the crop prescription map matching an area to be sprayed; and performing, by the operation unmanned aerial vehicle, a spraying operation along the spraying route, and when flying to each actual spraying point, performing pesticide spraying according to a matched spraying amount, until the spraying operation for the area to be sprayed is completed.

The computer storage medium in the embodiments of the present disclosure may use any combination of one or more computer readable media. The computer readable medium may be a computer readable signal medium or a computer readable storage medium. The computer readable storage medium may be, for example, but not limited to, an electronic, magnetic, optical, electromagnetic, infrared, or semiconductor system, apparatus, or means, or any combination of the above. More specific examples (a non-exhaustive list) of the computer readable storage medium include: an electrical connection having one or more wires, a portable computer disk, a hard disk, an RAM, a read only memory (Read Only Memory, ROM), an erasable programmable read only memory (Erasable Programmable Read Only Memory, EPROM), a flash memory, an optical fiber, a portable CD-ROM, an optical storage means, a magnetic storage means, or any suitable combination thereof. In this specification, the computer readable storage medium may be any tangible medium that includes or stores a program, and the program may be used by or in connection with an instruction execution system, apparatus, or means.

A computer readable signal medium may include a propagated data signal with computer readable program code embodied therein in baseband or as part of a carrier wave. Such a propagated data signal may use a variety of forms including, but not limited to, an electromagnetic signal, an optical signal, or any suitable combination thereof. The computer readable signal medium may alternatively be any computer readable medium other than a computer readable storage medium, which may transmit, propagate, or transport a program used by or in connection with an instruction execution system, apparatus, or means.

Program code embodied on a computer readable medium may be transmitted by any suitable medium, including but not limited to wireless, wire, optical cable, RF (Radio Frequency, RF), or the like, or any suitable combination thereof.

Computer program code for carrying out operations of the present disclosure may be written in one or more programming languages, or combinations thereof, including an object oriented programming language such as Java, Smalltalk, C++, and conventional procedural programming language, such as the "C" language or a similar programming language. The program code may be executed entirely on a user computer, partly on a user computer, as a stand-alone software package, partly on a user computer while partly on a remote computer, or entirely on a remote computer or server. In the case of a remote computer, the remote computer may be connected to the user computer through any type of networks, including an LAN or a WAN, or the connection may be made to an external computer (for example, via Internet using an internet service provider).

It should be noted that the foregoing descriptions are merely preferred embodiments of the present disclosure and technical principles applied thereto. Those skilled in the art will appreciate that the present disclosure is not limited to the specific embodiments described herein, and various modifications, changes and substitutions can be made by those skilled in the art without departing from the scope of the present disclosure. Therefore, the present disclosure is described in detail by the foregoing embodiments, but the present disclosure is not limited to the foregoing embodiments. Other equivalent embodiments may also be included without departing from the concept of the present disclosure. Therefore, the scope of the present disclosure depends on the appended claims.

## INDUSTRIAL APPLICABILITY

A scheme provided in embodiments of the present disclosure can be applied to an aspect of pesticide spraying control. A spraying route is mapped to a crop prescription map to determine a spraying control point on the spraying route and a spraying amount matching each spraying control point. In addition, based on each spraying control point, an actual spraying point on the spraying route and before the spraying control point is determined. A flight situation of an unmanned aerial vehicle and a time delay when a pesticide arrives at a farmland are considered, which ensures a pesticide spraying effect during adaptive pesticide spraying to the greatest extent.

## Claims

1.  A pesticide spraying control method, comprising:

    planning, by a controller, a spraying route matching an area to be sprayed, and mapping the spraying route to a crop prescription map matching the area to be sprayed; and
    determining, by the controller, a spraying control point in the spraying route and a spraying amount matching the spraying control point based on crop state information in at least two areas comprised in the crop prescription map, wherein the spraying control point is associated with an actual spraying point of an operation unmanned aerial vehicle, and the actual spraying point is spaced from the spraying control point associated with the actual spraying point by a set distance on the spraying route and is located before the spraying control point associated with the actual spraying point in a forward direction of the operation unmanned aerial vehicle.

2.  The method according to claim 1, wherein the crop prescription map comprises at least two grid areas, and a pest and weed severity level or a plant density level is separately associated in each grid area as crop state information.

3.  The method according to claim 2, wherein before the planning, by a controller, a spraying route matching an area to be sprayed, the method further comprises:

    obtaining, by the controller, pest and weed data matching the area to be sprayed, wherein the pest and weed data comprises image data and/or spectral data;
dividing, by the controller, the pest and weed data according to grid areas in a standard spatial coordinate system;
identifying, by the controller, the pest and weed severity level based on pest and weed data in each grid area after division; and
generating, by the controller, the crop prescription map based on a recognition result for each grid area.

4.  The method according to claim 2, wherein the determining, by the controller, a spraying control point in the spraying route and a spraying amount matching the spraying control point based on crop state information in at least two areas comprised in the crop prescription map comprises:

    determining, by the controller, equidistant spraying control points among a plurality of spraying passing points corresponding to the spraying route;
    dividing, by the controller, each standard line segment into at least one grid inner line segment based on a positional relationship between a grid area boundary in the crop prescription map and a standard line segment formed by connecting every two adjacent spraying control points; and
    determining, by the controller, a spraying amount matching each of the spraying control points based on at least one grid inner line segment associated with each of the spraying control points and a pest and weed severity level in a grid area matching the at least one grid inner line segment.

5.  The method according to claim 4, wherein the determining, by the controller, equidistant spraying control points among a plurality of spraying passing points corresponding to the spraying route comprises:

    obtaining, by the controller, a received signal response time and a flight speed, and determining a control point spacing based on a route distance between a spraying start point and a spraying end point;
    extracting, by the controller, the spraying start point and the spraying end point from the plurality of spraying passing points corresponding to the spraying route, and using both as the spraying control points; and
    separately determining, by the controller, each spraying control point on a spraying route between the spraying start point and the spraying end point based on the control point spacing, wherein a route distance between every two adjacent spraying control points is equal to the control point spacing.

6. The method according to claim 4, wherein the dividing, by the controller, each standard line segment into at least one grid inner line segment based on a positional relationship between a grid area boundary in the crop prescription map and a standard line segment formed by connecting every two adjacent spraying control points comprises:

when determining that the grid area boundary in the crop prescription map intersects with the standard line segment formed by connecting two adjacent spraying control points, obtaining, by the controller, at least one intersection point of the standard line segment and the grid area boundary, respectively extracting two adjacent points from the two adjacent spraying control points and the at least one intersection point, and connecting the two adjacent points to form at least two grid inner line segments; or
when determining that there is no intersection point between the grid area boundary in the crop prescription map and the standard line segment formed by connecting two adjacent spraying control points, using, by the controller, the standard line segment as a grid inner line segment.

7. The method according to claim 2, wherein the determining, by the controller, a spraying control point in the spraying route and a spraying amount matching the spraying control point based on crop state information in at least two areas comprised in the crop prescription map comprises:

using, by the controller, intersection points of the spraying route and a grid area boundary in the crop prescription map as non-equidistant spraying control points; and
using, by the controller, a standard line segment formed by connecting every two adjacent spraying control points as a grid inner line segment, and determining a spraying amount matching each of the spraying control points based on at least one grid inner line segment associated with each of the spraying control points and a pest and weed severity level in a grid area matching the at least one grid inner line segment.

8. The method according to claim 1, wherein before the planning, by a controller, a spraying route matching an area to be sprayed, the method further comprises:

obtaining an actual geographic area comprising a crop to be sprayed; and
determining at least one area to be sprayed in the actual geographical area based on the crop state information obtained of each area in the crop prescription map corresponding to the actual geographical area, wherein
an area range of the area to be sprayed is less than or equal to an area range of the actual geographical area.

9. The method according to any one of claims 1 to 8, wherein after the determining, by the controller, a spraying control point in the spraying route and a spraying amount matching the spraying control point based on crop state information in at least two areas comprised in the crop prescription map, the method further comprises:
sending, by the controller, the spraying route, each of the spraying control points, and the spraying amount matching the spraying control point to the operation unmanned aerial vehicle, so that the operation unmanned aerial vehicle performs pesticide spraying according to the spraying amount matching the spraying control point associated with the actual spraying point when flying along the spraying route to an actual spraying point at a set distance from each of the spraying control points.

10. The method according to any one of claims 1 to 8, wherein after the determining, by the controller, a spraying control point in the spraying route and a spraying amount matching the spraying control point based on crop state information in at least two areas comprised in the crop prescription map, the method further comprises:

determining, by the controller in the spraying route, an actual spraying point at a set distance from each of the spraying control points;
establishing, by the controller, a correspondence between each actual spraying point and a spraying amount based on the spraying control point; and
sending, by the controller, the spraying route, each of the actual spraying points, and the spraying amount corresponding to the actual spraying point to the operation unmanned aerial vehicle, so that the operation unmanned aerial vehicle performs pesticide spraying according to a corresponding spraying amount when flying along the spraying route to each of the actual spraying points.

11. The method according to claim 10, wherein the determining, by the controller in the spraying route, an actual spraying point at a set distance from each of the spraying control points comprises:

obtaining, by the controller, at least one speed association parameter of the operation unmanned aerial vehicle on the spraying route;

determining, by the controller based on the speed association parameter, a distance value corresponding to each spraying control point; and

determining, in the spraying route based on the distance value corresponding to each spraying control point, the actual spraying point at the set distance from each of the spraying control points.

12. A pesticide spraying control method, comprising:

receiving, by an operation unmanned aerial vehicle, a spraying route, each spraying control point, and a spraying amount matching the spraying control point that are sent by a controller, wherein the spraying control point and the spraying amount are determined by the controller based on crop state information in at least two areas comprised in a crop prescription map after the controller maps a planned spraying route to the crop prescription map matching an area to be sprayed;

performing, by the operation unmanned aerial vehicle, a spraying operation along the spraying route, and obtaining, in real time, the closest spraying control point in a forward direction as a target spraying control point;

detecting, by the operation unmanned aerial vehicle in real time, a distance value between a current position point and the target spraying control point;

performing, by the operation unmanned aerial vehicle, pesticide spraying according to a spraying amount matching the target spraying control point when determining that the distance value meets a preset distance interval condition; and

returning to perform an operation of obtaining, in real time, the closest spraying control point in the forward direction as the target spraying control point, until the spraying operation for the area to be sprayed is completed.

13. A pesticide spraying control method, comprising:

receiving, by an operation unmanned aerial vehicle, a spraying route, each actual spraying point, and a spraying amount corresponding to the actual spraying point that are sent by a controller, wherein the actual spraying point and the spraying amount are determined by the controller based on a spraying control point, a spraying amount and a preset distance that are determined based on crop state information in at least two areas comprised in a crop prescription map after the controller maps a planned spraying route to the crop prescription map matching an area to be sprayed; and

performing, by the operation unmanned aerial vehicle, a spraying operation along the spraying route, and when flying to each actual spraying point, performing pesticide spraying according to a matched spraying amount, until the spraying operation for the area to be sprayed is completed.

14. A pesticide spraying control apparatus, disposed in a controller and comprising:

a module for determining a spraying route, configured to plan a spraying route matching an area to be sprayed, and map the spraying route to a crop prescription map matching the area to be sprayed; and

a module for determining a spraying control point and a spraying amount, configured to determine a spraying control point in the spraying route and a spraying amount matching the spraying control point based on crop state information in at least two areas comprised in the crop prescription map, wherein the spraying control point is associated with an actual spraying point of an operation unmanned aerial vehicle; and the actual spraying point is spaced from the spraying control point associated with the actual spraying point by a set distance on the spraying route and is located before the spraying control point associated with the actual spraying point in a forward direction of the operation unmanned aerial vehicle.

15. A pesticide spraying control apparatus, disposed in an operation unmanned aerial vehicle and comprising:

a module for receiving spraying information, configured to receive a spraying route, each spraying control point, and a spraying amount matching the spraying control point that are sent by a controller, wherein the spraying control point and the spraying amount are determined by the controller based on crop state information in at least two areas comprised in a crop prescription map after the controller maps a planned spraying route to the crop prescription map matching an area to be sprayed;

a module for determining a target spraying control point, configured to perform a spraying operation along the spraying route, and obtain, in real time, the closest spraying control point in a forward direction as the target spraying control point;

a distance detection module, configured to detect, in real time, a distance value between a current position point and the target spraying control point;
a pesticide spraying module, configured to perform pesticide spraying according to a spraying amount matching the target spraying control point when it is determined that the distance value meets a preset distance interval condition; and
a cyclic real-time detection module, configured to return to perform an operation of obtaining, in real time, the closest spraying control point in the forward direction as the target spraying control point, until the spraying operation for the area to be sprayed is completed.

16. A pesticide spraying control apparatus, disposed in an operation unmanned aerial vehicle and comprising:

a module for receiving spraying information, configured to receive a spraying route, each actual spraying point, and a spraying amount corresponding to the actual spraying point that are sent by a controller, wherein the actual spraying point and the spraying amount are determined by the controller based on a spraying control point, a spraying amount and a preset distance that are determined based on crop state information in at least two areas comprised in a crop prescription map after the controller maps a planned spraying route to the crop prescription map matching an area to be sprayed; and
a pesticide spraying module, configured to perform a spraying operation along the spraying route, and when flying to each actual spraying point, perform pesticide spraying according to a matched spraying amount, until the spraying operation for the area to be sprayed is completed.

17. A device, comprising a memory, a processor, and a computer program stored in the memory and executable on the processor, wherein the program, when executed by the processor, the pesticide spraying control method according to any one of claims 1 to 11, 12 or 13 is implemented.

18. A computer readable storage medium, storing a computer program, wherein when the program is executed by a processor, the pesticide spraying control method according to any one of claims 1 to 11, 12 or 13 is implemented.

Planning, by a controller, a spraying route matching an area to be sprayed, and mapping the spraying route to a crop prescription map matching the area to be sprayed ⌒S110

Determining, by the controller, a spraying control point in the spraying route and a spraying amount matching the spraying control point based on crop state information in at least two areas included in the crop prescription map ⌒S120

FIG. 1a

FIG. 1b

Planning, by a controller, a spraying route matching an area to be sprayed, and mapping the spraying route to a crop prescription map matching the area to be sprayed — S210

Determining, by the controller, equidistant spraying control points among a plurality of spraying passing points corresponding to the spraying route — S220

Dividing, by the controller, each standard line segment into at least one grid inner line segment based on a positional relationship between a grid area boundary in the crop prescription map and a standard line segment formed by connecting every two adjacent spraying control points — S230

Determining, by the controller, a spraying amount matching each of the spraying control points based on at least one grid inner line segment associated with each of the spraying control points and a pest and weed severity level in a grid area matching the at least one grid inner line segment — S240

FIG. 2a

FIG. 2b

Planning, by a controller, a spraying route matching an area to be sprayed, and mapping the spraying route to a crop prescription map matching the area to be sprayed — S310

Using, by the controller, intersection points of the spraying route and a grid area boundary in the crop prescription map as non-equidistant spraying control points — S320

Using, by the controller, a standard line segment formed by connecting every two adjacent spraying control points as a grid inner line segment, and determining a spraying amount matching each of the spraying control points based on at least one grid inner line segment associated with each of the spraying control points and a pest and weed severity level in a grid area matching the at least one grid inner line segment — S330

FIG. 3a

FIG. 3b

Receiving, by an operation unmanned aerial vehicle, a spraying route, each spraying control point, and a spraying amount matching the spraying control point that are sent by a controller ⌐ S410

Performing, by the operation unmanned aerial vehicle, a spraying operation along the spraying route, and obtaining, in real time, the closest spraying control point in a forward direction as a target spraying control point ⌐ S420

Detecting, by the operation unmanned aerial vehicle in real time, a distance value between a current position point and the target spraying control point ⌐ S430

Performing, by the operation unmanned aerial vehicle, pesticide spraying according to a spraying amount matching the target spraying control point when determining that the distance value meets a preset distance interval condition ⌐ S440

Returning to perform an operation of obtaining, in real time, the closest spraying control point in the forward direction as the target spraying control point, until the spraying operation for the area to be sprayed is completed ⌐ S450

FIG. 4

Receiving, by an operation unmanned aerial vehicle, a spraying route, each actual spraying point, and a spraying amount corresponding to the actual spraying point that are sent by a controller — S510

Performing, by the operation unmanned aerial vehicle, a spraying operation along the spraying route, and when flying to each actual spraying point, performing pesticide spraying according to a matched spraying amount, until the spraying operation for the area to be sprayed is completed — S520

FIG. 5

Module for determining a spraying route — 610

Module for determining a spraying control point and a spraying amount — 620

FIG. 6

Module for receiving spraying information — 710

Module for determining a target spraying control point — 720

Distance detection module — 730

Pesticide spraying module — 740

Cyclic real-time detection module — 750

FIG. 7

| Module for receiving spraying information | ~810 |
|---|---|

| Pesticide spraying module | ~820 |
|---|---|

FIG. 8

FIG. 9

## INTERNATIONAL SEARCH REPORT

| International application No. |
|---|
| **PCT/CN2020/074711** |

**A. CLASSIFICATION OF SUBJECT MATTER**

A01M 7/00(2006.01)i

According to International Patent Classification (IPC) or to both national classification and IPC

**B. FIELDS SEARCHED**

Minimum documentation searched (classification system followed by classification symbols)

A01M, B64D, G05D, B64C

Documentation searched other than minimum documentation to the extent that such documents are included in the fields searched

Electronic data base consulted during the international search (name of data base and, where practicable, search terms used)

CNKI; CNABS; SIPOABS; DWPI; TWTXT; CNTXT: 植保, 控制点, 规划, 关联, 两个区域, 处方, 图, 航线, 映射, 实际, 距离, 补偿, 修正, 延迟, 延时, 漂移, 精准, 滞后, 农药, 网格, 栅格, 无人机, UAV, pesticide, prescript, spray+, unmanned, reference, waste, adjust+, parameter?, spread+, plant, protect+, agent, block, diagram, illustrat+

**C. DOCUMENTS CONSIDERED TO BE RELEVANT**

| Category* | Citation of document, with indication, where appropriate, of the relevant passages | Relevant to claim No. |
|---|---|---|
| PX | CN 109845715 A (XAG CO., LTD.) 07 June 2019 (2019-06-07) <br> claims 1-18 | 1-18 |
| A | CN 109122633 A (SOUTH CHINA AGRICULTURAL UNIVERSITY) 04 January 2019 (2019-01-04) <br> description, specific embodiment | 1-18 |
| A | CN 110461148 A (BAYER AG) 15 November 2019 (2019-11-15) <br> entire document | 1-18 |
| A | CN 107207091 A (YANMAR CO., LTD.) 26 September 2017 (2017-09-26) <br> entire document | 1-18 |
| A | CN 108196580 A (FOSHAN SHENFENG AVIATION TECHNOLOGY CO., LTD.) 22 June 2018 (2018-06-22) <br> entire document | 1-18 |
| A | CN 108157343 A (NORTHWEST A&F UNIVERSITY) 15 June 2018 (2018-06-15) <br> entire document | 1-18 |

☑ Further documents are listed in the continuation of Box C.    ☑ See patent family annex.

| | |
|---|---|
| *   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **11 May 2020** | **15 May 2020** |

| Name and mailing address of the ISA/CN | Authorized officer |
|---|---|
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/074711** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 105843250 A (SHENZHEN GAOKE XINNONG TECHNOLOGY CO., LTD.) 10 August 2016 (2016-08-10)<br>    entire document | 1-18 |
| A | JP H08317712 A (YANMAR AGRICULT EQUIP CO., LTD.) 03 December 1996 (1996-12-03)<br>    entire document | 1-18 |
| A | JP 2016085575 A (MINORU INDUSTRIAL CO., LTD.) 19 May 2016 (2016-05-19)<br>    entire document | 1-18 |
| A | US 2014303814 A1 (BEE ROBOTICS CORP.) 09 October 2014 (2014-10-09)<br>    entire document | 1-18 |

Form PCT/ISA/210 (second sheet) (January 2015)

**INTERNATIONAL SEARCH REPORT**
Information on patent family members

International application No.

**PCT/CN2020/074711**

| Patent document cited in search report | | | Publication date (day/month/year) | Patent family member(s) | | | Publication date (day/month/year) |
|---|---|---|---|---|---|---|---|
| CN | 109845715 | A | 07 June 2019 | None | | | |
| CN | 109122633 | A | 04 January 2019 | None | | | |
| CN | 110461148 | A | 15 November 2019 | EP | 3599846 | A2 | 05 February 2020 |
| | | | | WO | 2018172248 | A3 | 22 November 2018 |
| | | | | WO | 2018172248 | A2 | 27 September 2018 |
| | | | | US | 2020039647 | A1 | 06 February 2020 |
| | | | | AR | 111579 | A1 | 31 July 2019 |
| | | | | EP | 3378306 | A1 | 26 September 2018 |
| CN | 107207091 | A | 26 September 2017 | WO | 2016125422 | A1 | 11 August 2016 |
| | | | | JP | 2016144990 | A | 12 August 2016 |
| | | | | JP | 6431395 | B2 | 28 November 2018 |
| CN | 108196580 | A | 22 June 2018 | None | | | |
| CN | 108157343 | A | 15 June 2018 | None | | | |
| CN | 105843250 | A | 10 August 2016 | None | | | |
| JP | H08317712 | A | 03 December 1996 | JP | 2608260 | B2 | 07 May 1997 |
| JP | 2016085575 | A | 19 May 2016 | JP | 6342781 | B2 | 13 June 2018 |
| US | 2014303814 | A1 | 09 October 2014 | EP | 2978665 | A1 | 03 February 2016 |
| | | | | US | 9382003 | B2 | 05 July 2016 |
| | | | | EP | 2978665 | A4 | 26 April 2017 |
| | | | | WO | 2014160589 | A1 | 02 October 2014 |

Form PCT/ISA/210 (patent family annex) (January 2015)

**EP 3 932 199 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910167888